(19) Europäisches Patentamt
European Patent Office
Office européen des brevets

(11) **EP 2 533 081 A1**

(12) **EUROPEAN PATENT APPLICATION**

(43) Date of publication:
**12.12.2012 Bulletin 2012/50**

(51) Int Cl.:
***G02B 6/02*** *(2006.01)*

(21) Application number: **11305724.4**

(22) Date of filing: **09.06.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Université de Lille 1 Sciences et Technologies**
**59655 Villeneuve d'Ascq Cedex (FR)**

(72) Inventors:
• **Quiquempois, Yves**
**59520 Marquette Lez Lille (FR)**

• **Bouwmans, Géraud**
**59630 Cysoing (FR)**
• **Betourne, Aurélie**
**13006 Marseille (FR)**
• **Bigot, Laurent**
**59260 Hellemmes (FR)**
• **Douay, Marc**
**59000 Lille (FR)**

(74) Representative: **Matkowska, Franck**
**Matkowska & Associés**
**9, rue Jacques Prévert**
**59650 Villeneuve d'Ascq (FR)**

(54) **Hybrid photonic crystal fiber**

(57) The hybrid photonic crystal fiber comprising a core (4) having a refractive index ($n_{core}$) and surrounded by a cladding (1), the cladding (1) comprising a background material having a refractive index (n1), high index inclusions (2) and low index inclusions (3) embedded in said background material (1), said high index inclusions (2) having a refractive index ($n_2$) that is higher than the refractive index ($n_1$) of the background material (1) and higher than the refractive index ($n_{core}$) of the core (4), and said low index inclusions (3) having a refractive index ($n_3$) that lower than the refractive index ($n_{core}$) of the core (4). All the high index inclusions (2) form one inner ring (HIR) or two concentric inner rings surrounding the core (4), and all the low index inclusions (3) form two or more concentric outer rings ($LIR_1$; $LIR_2$) surrounding said inner ring of high index inclusions (2) or surrounding said two concentric inner rings of high index inclusions (2).

FIG.1

## Description

## Technical field

The present invention relates to a novel hybrid photonic crystal fiber exhibiting dispersion curves compatible with phase matching conditions for non-linear applications such as for example frequency doubling ((w+w → 2w), frequency tripling ((w+w+w → 3w), generation of twin photons (2w → w+w), generation of triplet photons (w3 → w+w+w), etc. This hybrid photonic crystal fiber can advantageously be used in numerous technical fields, such as for instance "all fiber" high-powered lasers, the securitisation of telecommunication networks through quantum cryptography, the generation of new frequencies through non-linear effects in various technical fields, and for instance in the field of telecommunications or the biomedical field.

## Prior art

Recent researches into the field of optical fibers have led to the development of a new type of so-called photonic crystal fibers (PCF), which are also called microstructured fibers or photonic bandgap fibers (PBGF).

In general, these photonic crystal fibers comprise a background material, most often in silica, and a network of longitudinal inclusions referred therein as "inclusions" and having refractive indices that are different from the refractive index of the background material.

The central region of the fiber without inclusions and surrounded by the inclusions is generally referred as the "core" of the fiber, and the remaining part of the fiber surrounding the core and comprising the inclusions is generally referred as the "cladding" of the fiber. Light is mainly confined to the core of the fiber.

The effective refractive index of the cladding of the optical fiber varies in function of the wavelength (dispersion). In contrast to step-index optical fibers, photonic crystal fibers advantageously enable this dispersion to be significantly modified, thanks to the presence of said inclusions of different refractive indices.

A first type of inclusions, referred therein as "high index" inclusions, is constituted by inclusions rods exhibiting a refractive index that is higher than the refractive index of the background material. For instance, but not exclusively, if the background material is silica, high index inclusions can be constituted by silica inclusions doped with germanium oxide ($GeO_2$).

A second type of inclusions, referred therein as "low index" inclusions, is constituted by inclusions exhibiting a refractive index that is lower than the refractive index of the background material. For instance, but not exclusively, if the background material is silica, low index inclusions can be constituted by cavities or holes filled with a fluid (gas or liquid), most often filled with air.

In some cases, the cladding can include only high index inclusions, or only low index inclusions, or a combination of high inclusions and low inclusions.

In some cases, the inclusions can be arranged in the form of a periodic network or be randomly distributed, or distributed according to a configuration including both periodic regions and non-periodic regions.

In a photonic crystal fibers, two main guiding mechanisms are invoked to explain why light is mainly confined to the core, depending on the core refractive index ($n_{core}$) compared to the cladding effective refractive index ($n_{FSM}$) : either index-guiding [also called Total Internal Reflection (TIR) guiding] or bandgap-guiding.

In photonic crystal fibers wherein the cladding is generally made of a periodic array of air-holes embedded within the material background, Total Internal Reflection (TIR) is generally the mechanism responsible for light guiding as the core refractive index ($n_{core}$) is greater than the cladding effective refractive index ($n_{FSM}$). The linear optical properties of this kind of fibers can be derived from the theory developed for standard step index fibers, having in mind that the cladding effective refractive index ($n_{FSM}$) depends strongly on the wavelength ($\lambda$).

In photonic crystal fibers wherein the cladding is generally made of a periodic array of high index inclusions [for example rods of silica inclusions doped with germanium oxide ($GeO_2$)] embedded within the material background, light cannot escape from the core due to the existence of photonic bandgaps of the cladding for finite spectral windows. The effective refractive index ($n_{FSM}$) of the cladding is then greater than core refractive index ($n_{core}$) . Such confinement leads to very unusual dispersive and spectral properties. Among these fibers, low contrast index Photonic BandGap Fibers (PBGF) are particularly interesting since they associate the advantages of solid fibers with the amazing optical properties of PBGFs. The high loss regions of the fiber can be deduced roughly from the ARROW model which tells us that this phenomenon appears when the high index rods are at cut-off.

In the publication entitled "Doped photonic bandgap fibers for short-wavelength non linear devices", Vol. 28, No. 10, p. 783 (2003), OPTICS LETTERS, Jesper Laegsgaard and Anders Bjarklev described a photonic crystal fiber including germanium oxide-doped silica pads and air holes, having zero dispersion in the visible range. The photonic crystal fibers described in this publication enables light to be guided only by photonic forbidden bands (bandgap-guiding) and does not enable light to be guided by index-guiding.

The concept that mixes the two aforesaid light guidance mechanisms, i.e. index-guiding and bandgap-guiding, has naturally been exploited in so called hybrid photonic crystal fibers in an attempt to design or find new original dispersive properties.

In 2006, Arismar Cerqueira et al have studied in the publication entitled "Hybrid photonic crystal fiber", Vol. 14, No. 2, p. 926 (2006), OPTICS EXPRESS, an air-hole PCF where one line of holes is substituted by germanium-doped high index inclusions. In this case, index-guiding and bandgap-guiding mechanisms both coexist at the same wavelength. Near the anti-resonance of the high index rods, light is confined mainly by index-guiding, whereas the bandgap-guiding effect plays the key role near the cutoff.

In PCT application WO 2009/047404, a different hybrid PCF has been proposed where light is confined by TIR (index guiding) at high wavelengths while the fiber behaves like a PBGF for shorter wavelengths. The principle behind this effect lies in the fact that the cladding effective refractive index ($n_{FSM}$) is greater than the core refractive index ($n_{core}$) for short wavelengths (below a cutoff value), and becomes lower than the core refractive index ($n_{core}$) for wavelengths higher than the said cutoff value. To achieve this particular effect, in a particular example depicted on figure 15 of this publication, the fiber cross-section is for example made of high index rods surrounded by six air-holes (honey-comb structure). Such an hybrid PCF advantageously allows phase matching conditions to be satisfied for frequency doubling or tripling. Indeed, due to the wavelength dependence of the cladding effective refractive index ($n_{FSM}$) in the TIR region, the effective index difference between the guided mode in the TIR region and the one located in the first band gap is high enough to compensate material dispersion.

The hybrid PCFs disclosed in PCT application WO 2009/047404 can advantageously be used for replacing non-linear crystals in non-linear optical applications, such as for instance the generation of twin photons ($2w \rightarrow w + w$ with $w = 2\pi c/\lambda$, c being the speed of light in vacuum, or more generally $W_1 \rightarrow W_2 + W_3$), the generation of triplet photons ($3w \rightarrow w+w+w$ or more generally $W_1 \rightarrow W_2 + W_3 + W_4$), or applications such as the generation of frequencies through a non-linear effect, and in particular the combining of three wavelengths ($w_1+w_2 \rightarrow W_3$ ) and more particularly frequency doubling ($w+w \rightarrow 2w$), the combining of four wavelengths ($W_1 + W_2 +W_3 \rightarrow W_4$, $W_1 + W_2 \rightarrow W_3 + W_4$) and more particularly frequency tripling ($w+w+w \rightarrow 3w$).

The design of theses hybrid PCFs disclosed in PCT application WO 2009/047404 is however complex and complicates the manufacture of the hybrid PCF.

## Objective of the invention

One objective of the invention is to propose a novel hybrid PCF which can advantageously be used to replace non-linear crystals in non-linear optical applications like the hybrid PCF fiber disclosed in PCT application WO 2009/047404, but which has a more simple design and is thus easier to manufacture.

## Summary of the invention

This object is achieved by the hybrid photonic crystal fiber defined in claim 1.

Although no real bandgap can be defined in this hybrid PCF of the invention (only one or two rings of high index rods), the inventors demonstrated that a bandgap-like fundamental mode can exist over a large spectral range, with relatively low loss. Such bandgap-like fundamental mode will be however assimilated and referred therein as a "bandgap guided core mode within the first bang gap". Such a behavior leads to amazing dispersion curves that can be exploited for nonlinear interactions and frequency conversion.

The hybrid photonic crystal fiber of the invention enables to obtain simultaneously an index guided core mode, especially at wavelengths higher than a cutoff value, and a bandgap guided core mode within the first bang gap, especially at low wavelengths lower than a cutoff value.

The hybrid PCF of the invention can also include other additional and optional technical characteristics mentioned in the appended claims.

## Brief description of the drawings

The characteristic features and advantages of the invention will appear more clearly and completely upon reading the detailed description hereinafter of preferred embodiments of hybrid PCFs of the invention, said detailed description being given by way of non-limiting and non-exhaustive examples of the invention and with reference to the appended figures, in which:

- Figure 1 is a cross-sectional view of an hybrid PCF according to a first embodiment of the invention.
- Figure 2 is a diagram showing the effective refractive index ($n_{eff}$) variation of the guided core mode within the first band gap (curve BG) and of the Total Internal Reflection guided core mode (curve TIR) in function of the normalized wavelength ($\lambda/\Lambda$) of the fiber of figure 1, the background material dispersion being not taken into account.
- Figure 3 is a diagram showing in continuous line the confinement loss (CL) of the guided core mode (curve CL-BG) in the first band gap (BG) of the fiber of figure 1 in function of the normalized wavelength ($\lambda/\Lambda$) and in dashed lines the confinement loss (CL) of the TIR core mode (curve CL-TIR) of the fiber of figure 1 in function of the normalized wavelength ($\lambda/\Lambda$).
- Figure 4 show the chromatic dispersions and effective areas for fiber RH of figure 1 in function of the normalized wavelength ($\lambda/\Lambda$).
- Figure 5 is a cross-sectional view of an hybrid PCF according to a second embodiment of the invention.
- Figure 6 (prior art) is a cross-sectional view of a standard all-solid photonic crystal band gap fiber (hereafter referred ASPBG fiber).

## Detailed description

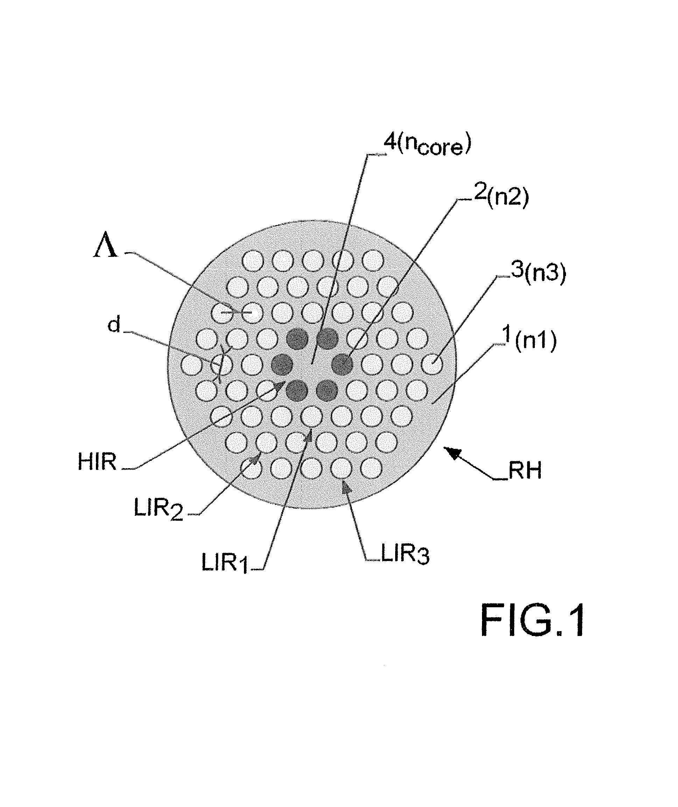

With reference to the particular embodiment figure 1, the hybrid photonic crystal fiber RH comprises a cladding 1 surrounding a core 4. The cladding 1 is made of a background material 1 of refractive index $n_1$, in which is embedded a network of high index inclusions 2 and of low index inclusions 3, which extend along the entire length of the fiber. The high index inclusions 2 exhibit a refractive index $n_2$ that is higher than the refractive index $n_1$ of the background material, and the low index inclusions 3 exhibit a refractive index $n_3$ that is lower than the refractive index $n_1$ of the background material.

In this particular embodiment the high index inclusions 2 form only one inner ring HIR of hexagonal shape and made of six high index inclusions 2 and all the low index inclusions 3 form three concentric outer rings $LIR_1$, $LIR_2$, $LIR_3$ of hexagonal shape and surrounding said inner ring HIR of high index inclusions 2. The first outer ring $LIR_1$ is made of twelve low index inclusions 3. This first outer ring $LIR_1$ is surrounded by a second outer ring $LIR_2$ made of eighteen low index inclusions 3. This second outer ring $LIR_2$ is surrounded by a third outer ring $LIR_3$ made of twenty-four low index inclusions 3.

The inner ring HIR of high index inclusions 2 surrounds and delimits the core 4 of the fiber in which the light is mainly confined. Said core 4 is constituted by a central defect without any inclusion 2 or 3 at the center of the fiber.

In the embodiments illustrated in the drawings, the core 4 of the fiber is made of the same background material as the cladding 1 and thus exhibits a refractive index $n_{core}$ that is identical to the refractive index $n_1$ of the background material 1. This does not, however, limit the invention. In another embodiment, the core 4 could have a refractive index $n_{core}$ that is different from the refractive index $n_1$ of the background material of the cladding 1. In all cases, care will be taken to ensure that the refractive index $n_2$ of the high index inclusions 2 is higher than the refractive index $n_{core}$ of the core 4 and the refractive index $n_3$ of the low index inclusions 3 is lower than the refractive index $n_{core}$ of the core 4.

When the core 4 is made of a homogeneous material, its refractive index $n_{core}$ corresponds to the refractive index of said material. If the core 4 is non-homogeneous, the refractive index $n_{core}$ of the core will be an average index. Thus, in the present text, the term "refractive index $n_{core}$" indicates the refractive index of the constitutive material of the core 4 in the case of a homogeneous core, or the average refractive index of the core 4 in the case of a non-homogeneous core 4.

More particularly, the background material of the fiber is for instance made of silica. The inclusions 2 are constituted by silica rods doped with germanium oxide ($GeO_2$). The inclusions 3 are longitudinal air holes.

The invention is not limited to this particular type of inclusions. For instance, and in a non-exhaustive manner, the high index inclusions 2 could be constituted by silica doped with phosphorus, or by tellurite or chalcogenide glass, etc. The air holes 3 can be replaced by longitudinal cavities filled with a fluid (liquid or gas other than air) presenting a refractive index that is lower than the refractive index $n_1$ of the background material of the cladding 1 (as for instance water, ethanol). The air holes 3 can be replaced by solid longitudinal rods made of a material presenting a refractive index that is lower than the refractive index $n_1$ of the background material, as for instance silica doped with fluorine.

Despite the fact that, for the implementation of the invention, silica is a particularly appropriate material for the background material, the invention is nevertheless not limited to this sole material. For instance, the background material of the fiber could be constituted by chalcogenide glass, tellurite glass or any other glass exhibiting negligible absorption in the spectral zones considered by the invention.

In Figure 1, the inclusions 2 and 3 present a circular cross section of substantially the same diameter d. The diameter of the low index inclusions 3 could be different from the diameter of the high index inclusions 2. The high index inclusions 2 do not necessarily exhibit the same shape and/or size and the low index inclusions 3 do not necessarily exhibit the same shape and/or size. Furthermore, the invention is not limited to inclusions 2, 3 having a circular cross section, but the inclusions 2 and 3 can exhibit other shapes in cross section.

In the particular example illustrated in figure 1, and in a non-limiting manner of the invention, the network of inclusions 2, 3 is periodic. With reference to figure 1, this periodic network is characterised by a network step $\Lambda$, also commonly referred to as a "pitch", and corresponding in this example to the distance between the centres of two adjacent index inclusions of low index inclusions 3 or to the distance between the centres of two adjacent index inclusions of high index inclusions 2.

In the example of figure 1, the core 4 is homogeneous and constituted of the same material as the background material of the cladding. In the context of the invention, it is possible to introduce into the core 4 defects that can be non periodic and of a very small dimension with reference in particular to the pitch $\Lambda$ of the network, such as micrometric air holes, provided that the refractive index $n_2$ of the high index inclusions 2 is higher than the refractive index $n_{core}$ of the core 4 and the refractive index $n_3$ of the low index inclusions 3 is lower than the refractive index $n_{core}$ of the core 4.

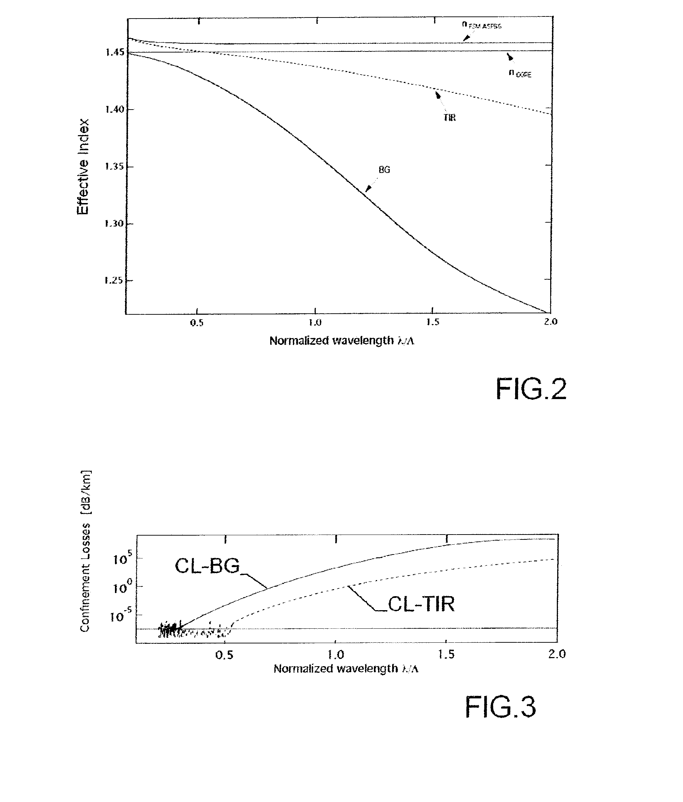

In the rest of the description and for reasons of clarity and simplification of the presentation of the invention, the technical considerations are applied to an hybrid photonic crystal fiber RF exhibiting the cross section of figure 1, with a silica background material 1, with high index inclusions 2 of silica doped with germanium oxide ($GeO_2$), and with low index inclusions 3 constituted by air holes. For the sake of simplicity, and to have a general understanding of such an hybrid PCF, in the curves of figures 2 the background material dispersion is not taken into account, so that dispersion curves can be easily rescaled. The pitch $\Lambda$ of the hexagonal lattice is normalized to 1$\mu$m. Both the diameters d of the high index inclusions 2 and of the low index inclusions 3 are assumed to be equal. The ratio d/A is fixed to 0.7.

The results of the curves of Figure 2 were obtained by a vectorial calculation method of Finite elements implemented by means of the COMSOL multiphysics™software (version 3.5a). This calculation method consists in resolving the Helmholtz equation in a cross section of the fiber for a given wavelength and in deducting the effective index ($n_{eff}$) of the different modes in function of the wavelength.

In these calculations, for the low index inclusions 3 (air holes), the refractive index of these inclusions was equal to 1. For the high index inclusions 2, the calculations were carried out by modelling the refractive index of each high inclusion 2 by the following parabolic law:

$$n(r) = -\frac{\Delta n}{R^2} r^2 + \Delta n + n1$$

Where r is the distance from the centre of the inclusion, R is the radius of the inclusion, $\Delta n$ is the difference of the refractive index between the inclusions 2 of a high index and the refractive index $n_1$ of the silica. For the calculations, $\Delta n$ was a constant equal to $30.10^{-3}$.

The confinement loss curves of figure 3 were obtained thanks to a perfectly matched layer added to the ends of the computational domain.

<u>Bandgap-like guided core mode (BG)</u>

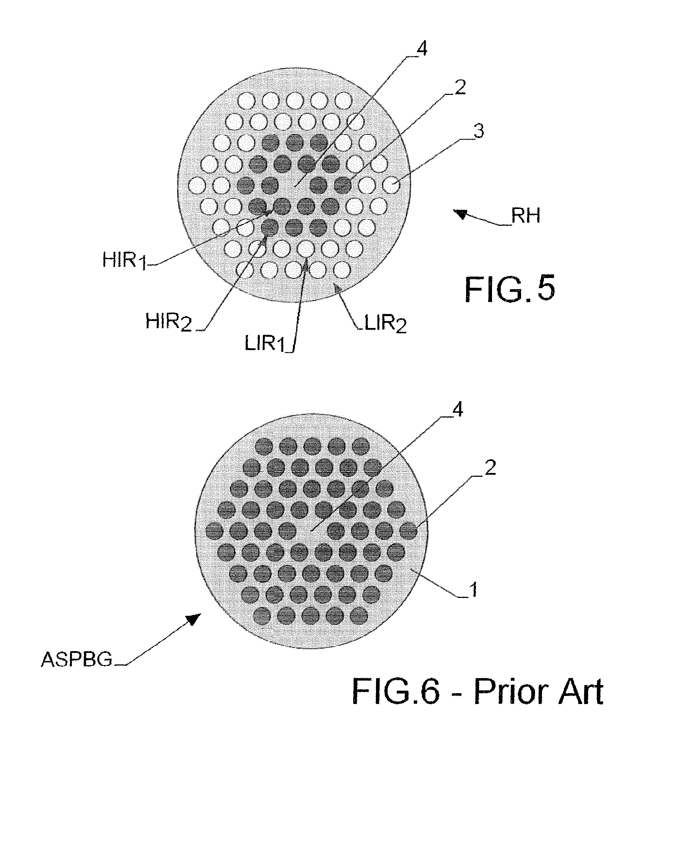

Referring to the curve BG of figure 2, a guided core mode in the first band gap exists and the domain where this guided core mode exists is extended far above 0.5 for the normalized wavelength $\lambda/\Lambda$ and a core mode still exists at $\lambda/\Lambda$ of 2. In the range 0.2 to 0.5 for the normalized wavelength $\lambda/\Lambda$, the effective refractive index ($n_{eff}$) of the guided core mode within the first band gap (curve BG) is lower than the effective refractive index of the core 4 ($n_{core}$ = 1.45) and is actually very similar to the effective refractive index of the guided core mode within the first band gap that is obtained with a standard all-solid photonic crystal band gap fiber (hereafter referred ASPBG fiber) having the cross section of figure 6, that is to say the same cross section than the fiber of figure 1 but with only high index inclusions 2.

Referring to figure 3 (continuous line), for $\lambda/\Lambda$ up to 0.5 the confinement loss (CL) is also advantageously very low. It has to be noted that the maximum value of the confinement loss (CL) is obtained for $\lambda/\Lambda$ equal to 1.93.

<u>Index-guided core modes (TIR mode)</u>

Contrary to an ASPBG fiber (see figure 2 effective refractive index $n_{FSM\ ASPBG}$ higher than $n_{core}$), an extra index-guided core mode (TIR mode) is obtained for fiber RH (dashed black lines in Fig 2 referred TIR) for $\lambda/\Lambda$ higher than a cutoff value equal to 0.53. The confinement loss CL, which is also shown in figure 3 in dashed lines for this TIR mode, increases as a function of the wavelength. The level of losses is relatively low and reaches approximately 1 dB/m at $\lambda/\Lambda$ equal to 1.56.

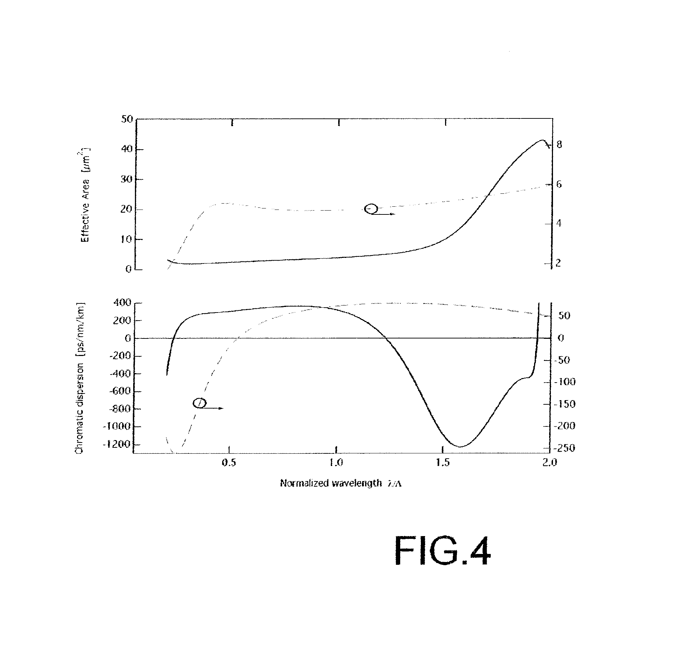

<u>Group Velocity Dispersion curves and effective areas (figure 4)</u>

Group Velocity Dispersions (GVD) and effective areas for fiber RH are shown in figure 4. The curves in continuous line correspond to the BG core mode while the curves in dashed lines stand for the TIR core mode.

The TIR mode exhibits a relatively flat dispersion curve between 0.8 and 2 with a maximum value of about 80ps/nm.km at $\lambda/\Lambda$ equal to 1.35. The zero GVD is reached at $\lambda/\Lambda$ equal to 0.532. The GVD curve of the BG core mode is more complex. Three zeros can be observed in the spectrum respectively at $\lambda/\Lambda$ equal to 0.235, at $\lambda/\Lambda$ equal to 1.228 and at $\lambda/\Lambda$ equal to 1.936. Dispersion is normal between the two last zeros and abnormal between the two first zeros.

The effective area of the TIR mode is relatively flat between for $\lambda/\Lambda$ ranging from 0.5 to ,2 and its mean value is about $5\mu m^2$ while for the BG core mode, it increases strongly for high wavelengths where it is maximum ($43\mu m^2$)at $\lambda/\Lambda$ equal to 1.95.

<u>Applications</u>

In the fiber RH of the invention light can be advantageously confined mainly in the core 4 and guided in all the directions :

- by Total Internal Reflection (index guided core mode) at wavelengths higher than a cutoff value, i.e. typically in the particular case of figure 2 for $\lambda/\Lambda$ higher than 0.53.
- and by a bandgap-guiding mechanism in the first band gap (bandgap guided core mode BG within the first bandgap), more particularly (but not only) at least at wavelengths lower than the aforesaid cutoff value, i.e. more particularly (but not only) in the particular case of figure 2 for $\lambda/\Lambda$ between 0.2 and 0.5.

The fiber RH of the invention advantageously enables to achieve a phase matching condition between the index guided core mode and the bandgap guided core mode within the fist bandgap, at two different wavelengths. This phase index match enables the optical fiber RH to be used for a combination of at least three phasematched waves (frequency doubling, frequency tripling,...) .

The fiber RH of the invention can thus advantageously be used for replacing non-linear crystals in non-linear optical applications, such as for instance the generation of frequencies through a non-linear effect, and in particular the combining of three wavelengths ($w_1+w_2 \to w_3$) and more particularly frequency doubling ($w+w \to 2w$ with $w = 2\pi c/\lambda$, c being the speed of light in vacuum), the combining of four wavelengths ($W_1 + W_2 +W_3 \to W_4$, $W_1 + W_2 \to W_3 + W_4$) and more particularly frequency tripling ($w+w+w \to 3w$). The fiber RH of the invention can also advantageously be used for the generation of twin photons ($2w \to w + w$ or more generally $w_1 \to w_2 + w_3$), the generation of triplet photons ($3w \to w+w+w$ or more generally $w_1 \to w_2 + w_3 + w_4$).

Variant of figure 5

Figure 5 shows another variant of a fiber RH of the invention wherein the fiber comprises two concentric inner rings $HIR_1$ and $HIR_2$ of high index inclusions 2 instead of only one inner ring HIR for the variant of figure 1, and two concentric outer rings $LIR_1$ and $LIR_2$ of low index inclusions 3.

In other variants, the fiber RH of the invention can comprise a different number of outer rings of low index inclusions 3, provided that the fiber comprises two outer rings $LIR_1$, $LIR_2$ or more.

Within the scope of the invention, the refractive index $n_3$ of the low index inclusions 3 is not necessary lower than the refractive index $n_1$ of the background material. For example, in another variant, the background material (index $n_1$) can be made of silica ; the core 4 can be made of silica doped with germanium ($n_{core} > n_1$); the high index inclusions 2 can be made of silica doped with silica, but with a higher germanium concentration than in the core 4 in such a way that $n_2$ is higher than $n_{core}$. The low index inclusions 3 can be made of silica doped with silica, but with a lower germanium concentration than in the core 4 in such a way that $n_3$ is lower than $n_{core}$, but $n_3$ is higher than $n_1$.

**Claims**

1. Hybrid photonic crystal fiber comprising a core (4) having a refractive index ($n_{core}$) and surrounded by a cladding (1), the cladding (1) comprising a background material having a refractive index (n1), high index inclusions (2) and low index inclusions (3) embedded in said background material (1), said high index inclusions (2) having a refractive index ($n_2$) that is higher than the refractive index ($n_1$) of the background material (1) and higher than the refractive index ($n_{core}$) of the core (4), and said low index inclusions (3) having a refractive index ($n_3$) that is lower than the refractive index ($n_{core}$) of the core (4), wherein all the high index inclusions (2) form one inner ring (HIR) or two concentric inner rings ($HIR_1$; $HIR_2$) surrounding the core (4), and all the low index inclusions (3) form two or more concentric outer rings ($LIR_1$; $LIR_2$) surrounding said inner ring of high index inclusions (2) or surrounding said two concentric inner rings of high index inclusions (2).

2. Hybrid photonic crystal fiber according to claim 1, wherein the refractive index ($n_{core}$) of the core (4) is equal to the refractive index ($n_1$) of the background material of the cladding (1).

3. Hybrid photonic crystal fiber according to claim 2 wherein the core (4) of the fiber is constituted of the same material as the background material of the cladding (1).

4. Hybrid photonic crystal fiber according to any one of claim 1 to 3, wherein the effective refractive index of the cladding (1) is lower than the refractive index ($n_{core}$) of the core (4) at least in a wavelength range higher than a cutoff value.

5. Hybrid photonic crystal fiber according to any one of claim 1 to 4, wherein a bandgap guided core mode within the first band gap exists at least at wavelengths lower than said cutoff value.

6. Hybrid photonic crystal fiber according to any one of claims 1 to 5, wherein the inclusions (2, 3) are arranged in the form of a periodic network **characterised by** a constant pitch ($\Lambda$).

7. Hybrid photonic crystal fiber according to claim 6 wherein the network of inclusions (2, 3) is hexagonal.

8. Hybrid photonic crystal fiber according to any one of claims 1 to 7, wherein the background material is made of silica and the low index inclusions (3) comprise air holes.

9. Hybrid photonic crystal fiber according to any one of claims 1 to 8, wherein the background material is made of silica and the high index inclusions (2) comprise inclusions made of doped silica.

10. Hybrid photonic crystal fiber according to Claim 9, wherein the high index inclusions comprise inclusions made of silica doped with germanium or of silica doped with phosphorus.

11. Hybrid photonic crystal fiber according to any one of claims 1 to 10, wherein the background material is made of silica and the high index inclusions (2) comprises inclusions made of tellurite glass or of chalcogenide glass.

12. Hybrid photonic crystal fiber according to any one of claims 1 to 11, wherein the high index inclusions (2) comprise inclusions containing a liquid or gas having a refractive index ($n_2$) that is higher than the refractive index ($n_1$) of the background material and higher than the refractive index ($n_{core}$) of the core.

13. Hybrid photonic crystal fiber according to any one of claims 1 to 12, wherein the low inclusions (3) comprise inclusions containing a liquid or gas having a refractive index ($n_3$) that is lower than the refractive index ($n_1$) of the background material and lower than the refractive index ($n_{core}$) of the core.

14. Hybrid photonic crystal fiber according to any one of claims 1 to 13, wherein the refractive index ($n_3$) of the low index inclusions (3) is lower than the refractive index ($n_1$) of the background material.

15. Hybrid photonic crystal fiber according to any one of claims 1 to 13, wherein the refractive index ($n_3$) of the low index inclusions (3) is higher than the refractive index ($n_1$) of the background material.

16. Use of an hybrid photonic crystal fiber, as the one defined in anyone of the previous claims, for the generation of frequencies by non-linear effects, in particular for at least one of the following applications: the generation of twin photons, the generation of triplet photons, the generation of multiple frequencies, in particular frequency doubling or frequency tripling.

FIG.1

FIG.2

FIG.3

FIG.4

RH

FIG.5

ASPBG

FIG.6 - Prior Art

**Europäisches Patentamt**
**European Patent Office**
**Office européen des brevets**

# EUROPEAN SEARCH REPORT

Application Number

EP 11 30 5724

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | B.T.KUHLMEY ET AL.: "Selecctively filled hybrid ARROW fibers", PROC. OF SPIE, PO BOX 10 BELLINGHAM WA 98227-0010 USA, vol. 6801, 2008, pages 680118-1-680118-6, XP040430927, DOI: 10.1117/12.764756 * the whole document * | 1-8, 12-16 | INV. G02B6/02 |
| X | X-H FANG ET AL: "Hybrid multicore photonic-crystal fiber for in-phae supermode selection", OPTICS LETTERS, OSA, OPTICAL SOCIETY OF AMERICA, WASHINGTON, DC, US, vol. 35, no. 4, 15 February 2010 (2010-02-15), pages 493-495, XP001552140, ISSN: 0146-9592 * the whole document * | 1-11, 13-16 | |
| X | HU D J J ET AL: "Hybrid photonic crystal fiber coupler infiltrated with liquid crystals", IEEE/LEOS WINTER TOPICALS MEETING SERIES, 2009, IEEE, PISCATAWAY, NJ, USA, 12 January 2009 (2009-01-12), pages 66-67, XP031416629, ISBN: 978-1-4244-2610-2 * the whole document * | 1-8, 12-15 | **TECHNICAL FIELDS SEARCHED (IPC)** G02B |
| A | EP 2 020 611 A1 (UNIV LILLE SCIENCES TECH [FR]) 4 February 2009 (2009-02-04) * abstract; figure 15 * | 1-16 | |

-/--

The present search report has been drawn up for all claims

| Place of search | Date of completion of the search | Examiner |
|---|---|---|
| Munich | 3 November 2011 | Riblet, Philippe |

EPO FORM 1503 03.82 (P04C01)

## EUROPEAN SEARCH REPORT

Application Number

EP 11 30 5724

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | S. KIM ET AL.: "The Impact of Ring Core on Chromatic Dispersion for Photonic Quasicrysta Fiber", PROC. OF SPIE, PO BOX 10 BELLINGHAM WA 98227-0010 USA, vol. 7714, 2010, pages 77140Y-1-77140Y-6, XP040523685, DOI: 10.1117/12.848922 * the whole document * | 1-16 | |

-----

TECHNICAL FIELDS
SEARCHED        (IPC)

The present search report has been drawn up for all claims

| Place of search | Date of completion of the search | Examiner |
|---|---|---|
| Munich | 3 November 2011 | Riblet, Philippe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 11 30 5724

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2011

| Patent document cited in search report | | Publication date | Patent family member(s) | | Publication date |
|---|---|---|---|---|---|
| EP 2020611 | A1 | 04-02-2009 | EP | 2174171 A1 | 14-04-2010 |
| | | | WO | 2009047404 A1 | 16-04-2009 |
| | | | JP | 2010534860 A | 11-11-2010 |
| | | | US | 2010226614 A1 | 09-09-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009047404 A

**Non-patent literature cited in the description**

- **JESPER LAEGSGAARD ; ANDERS BJARKLEV.** Doped photonic bandgap fibers for short-wavelength non linear devices. *OPTICS LETTERS,* 2003, vol. 28 (10), 783

- **ARISMAR CERQUEIRA et al.** Hybrid photonic crystal fiber. *OPTICS EXPRESS,* 2006, vol. 14 (2), 926